# EUROPÄISCHE PATENTANMELDUNG

(11) **EP 1 878 960 A2**
(43) Veröffentlichungstag der Anmeldung: **16.01.2008**
(21) Anmeldenummer: 07450063.8
(22) Anmeldetag: 29.03.2007
(51) Int. Cl.: F16L 5/14

(54) **Einrichtung zur abgedichteten Durchführung von Leitungen, Rohren u.dgl. durch Wände hindurch**

(30) Priorität: 13.07.2006 AT 11942006
(71) Anmelder: Döpfl, Wolfgang, 3061 Schönfeld (AT)
(72) Erfinder: Döpfl, Wolfgang, 3061 Schönfeld (AT)
(74) Vertreter: Atzwanger, Richard

(57) **Zusammenfassung**

Einrichtung zur abgedichteten bzw. brandgesicherten Durchführung von Leitungen (15), Rohren u.dgl. durch in Wänden (16) befindlichen Ausnehmungen (16a) hindurch unter Verwendung von mindestens einem elastisch verformbaren Dichtungselement [22], welches von den Leitungen [15], Kabeln, Rohren u.dgl. durchsetzt ist. Dabei ist an einer Seite der Wand [16] an dieser ein zylindrisches Rohrstück [21] befestigt, in welches mindestens ein mit Kanälen [22a] ausgebildetes, elastisch verformbares Dichtungselement (22) eingesetzt ist, welches von den Leitungen [15], Kabeln, Rohren u.dgl. durchsetzt ist und ist dem freien Ende des zylindrischen Rohrstückes [21] ein Abschlusselement [25] zugeordnet, durch welches das elastisch verformbare Dichtungselement [22] innerhalb des Rohrstückes [21] an die Leitungen (15), Kabel, Rohre u.dgl. zur dichten Anlage gebracht wird.

## Beschreibung

Die gegenständliche Erfindung betrifft eine Einrichtung zur abgedichteten bzw. brandgesicherten Durchführung von Leitungen, Kabeln, Rohren u.dgl. durch in Wänden befindlichen Ausnehmungen hindurch unter Verwendung von mindestens einem elastisch verformbaren Dichtungselement, welches von den Leitungen, Kabeln, Rohren u.dgl. durchsetzt ist.

Es besteht oftmals das Erfordernis, Leitungen, Kabel, Rohre u.dgl. durch Wände in einer solchen Weise hindurchzuführen, dass sie gegenüber dem Durchtritt von Wasser, Dämpfen, Gasen, Rauchgasen, Luft u.dgl. gesichert sind. Dieses Erfordernis besteht z.B. bei Schiffen, welche mit einem Bugstrahlruder bzw. mit einem Heckstrahlruder ausgebildet sind, wobei die Speiseleitung, die Steuerleitung und weitere Leitungen durch die Stahlwand des Schiffes hindurch zum Antrieb für die Ruderschraube geführt sind und diese Leitungen so abgedichtet sein müssen, das ein Eintritt von Wasser in den Innenraum des Schiffes mit Sicherheit ausgeschlossen wird.

Ein analoges Erfordernis besteht bei Schiffen, welche mit der Stabilisierung dienenden Wassertanks ausgebildet sind, wobei zum Betrieb dieser Tanks durch deren Wände Leitungen, Rohre, Kabel u.dgl. hindurchgeführt sind, welche gleichfalls so abgedichtet sein müssen, dass ein Übertritt von Wasser aus diesen Tanks in den Innenraum des Schiffes mit Sicherheit ausgeschlossen wird.

Diese Aufgaben werden erfindungsgemäß dadurch gelöst, dass an einer Seite der Wand an dieser ein zylindrisches Rohrstück befestigt ist, in welches mindestens ein mit Kanälen ausgebildetes, elastisch verformbares Dichtungselement eingesetzt ist, welches von den Leitungen, Kabeln, Rohren u.dgl. durchsetzt ist und dass dem freien Ende des zylindrischen Rohrstückes ein Abschlusselement zugeordnet ist, durch welches das elastisch verformbare Dichtungselement innerhalb des Rohrstückes an die Rohre u.dgl. zur dichten Anlage gebracht ist.

Vorzugsweise ist das zylindrische Rohrstück an seinem freien Ende mit einem Gewinde, vorzugsweise mit einem Innengewinde, ausgebildet, mit welchem das Abschlusselement verschraubbar ist. Dabei kann dem Abschlusselement mindestens eine Fixierschraube zugeordnet sein, welche mit dem Rohrstück verschraubbar ist.
Zudem können sich zwischen den in das Rohrstück eingesetzten Dichtungselementen Abstandsringe befinden.

Gemäß einer vorteilhaften Ergänzung ist weiters außerhalb des Rohrstückes ein Gehäuse vorgesehen, welches sich vom Rohrstück im Abstand befindet und welches gleichfalls an der Wand befestigt ist, wobei das Gehäuse mit mindestens einem Dichtungskörper ausgebildet ist, welcher von den Leitungen, Kabeln, Rohren u.dgl. durchsetzt ist. Dabei kann das Gehäuse aus zwei miteinander lösbar verbundenen Teilen bestehen, wobei der erste Teil mit der Wand verbunden ist und der zweite Teil mit dem Dichtungskörper ausgebildet ist.

Vorzugsweise besteht das Gehäuse aus zwei miteinander lösbar verbundenen Teilen, wobei der erste Teil mit der Wand starr verbunden ist und der zweite Teil mit dem mindestens einen Dichtungskörper ausgebildet ist. Dabei können die beiden Gehäuseteile mit einander zugeordneten, radial nach außen abragenden Flanschen ausgebildet sein, welche miteinander verschraubbar sind, wobei sich vorzugsweise zwischen den Flanschen eine Dichtung befindet.

Gemäß einer alternativen Ausführungsform ist an der Wand eine Platte starr befestigt, an welcher das Gehäuse lösbar befestigt ist. Dabei kann die Platte, welche kreisförmig berandet ist, an ihrer seitlichen Stirnfläche mit einem Gewinde ausgebildet sein, mit welchem das Gehäuse, welches hohlzylindrisch ausgebildet ist, verschraubt ist. Gemäß einer geänderten Ausführungsform kann die Platte mit Gewindebohrungen ausgebildet sein, in welche das Gehäuse durchsetzende Schraubbolzen eingeschraubt sind. Weiters ist vorzugsweise das Gehäuse im Bereich seiner an die Wand anliegenden Stirnfläche mit einer Dichtung ausgebildet. Zudem ist vorzugsweise das Gehäuse mit einem Rahmen ausgebildet, innerhalb dessen sich der mindestens eine Dichtungskörper befindet, welcher von den Leitungen, Kabeln, Rohren u.dgl. durchsetzt ist, wobei sich außerhalb des Dichtungskörpers zwei Pressplatten befinden, welchen Stellschrauben zugeordnet sind.

Der Gegenstand der Erfindung ist nachstehend anhand von in der Zeichnung dargestellten Ausführungsbeispielen näher erläutert. Es zeigen:
- Fig.1: ein Schiff, welches mit einem Bugstrahlruder und mit einem Heckstrahlruder ausgebildet ist, in Seitenansicht;
- Fig.1a: das Heckstrahlruder gemäß Fig.1, in axonometrischer und teilweise aufgebrochner sowie in gegenüber Fig.1 vergrößerter Darstellung;
- Fig.2: ein mit zwei Ballastwassertanks ausgebildetes Schiff, im Querschnitt und in schematischer Darstellung;
- Fig.3: eine erfindungsgemäße Einrichtung zur abgedichteten bzw. brandgesicherten Hindurchführung von Leitungen, Kabeln, Rohren u.dgl. durch ein Wand hindurch, in axialem Schnitt;
- Fig.4: eine erfindungsgemäße Einrichtung, welche von einem ergänzenden Gehäuse umgeben ist, in axialem Schnitt; und
- Fig.5 und 6: zwei weitere Ausführungsformen einer erfindungsgemäßen Einrichtung, gleichfalls in axialen Schnitten.

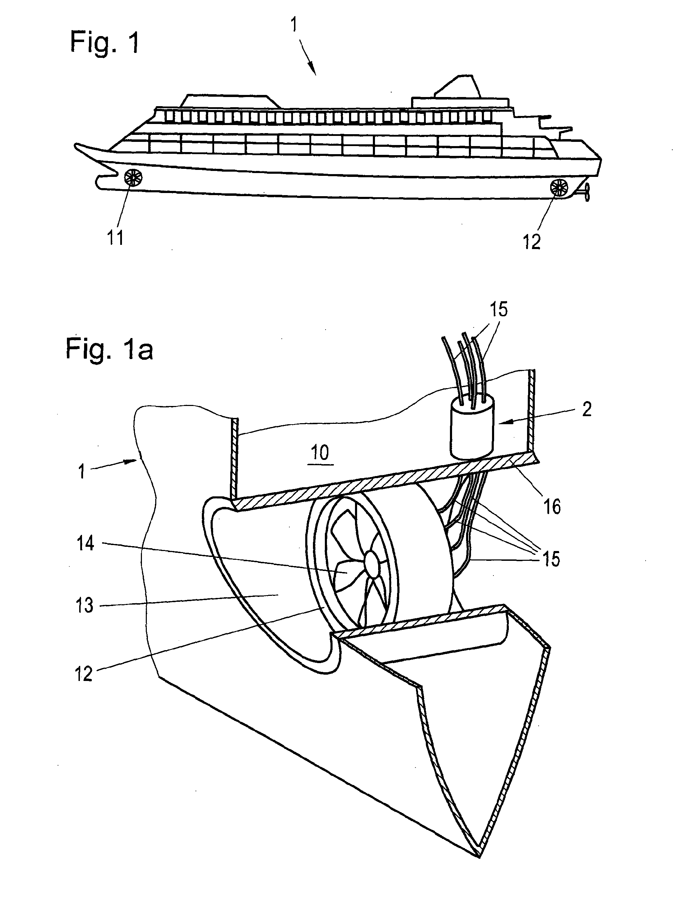

In Fig.1 ist ein Schiff 1 dargestellt, welches mit einem Bugstrahlruder 11 und mit einem Heckstrahlruder 12 ausgebildet ist. Der Zweck derartiger Bugstrahlruder 11 und Heckstrahlruder 12 besteht darin, das Schiff 1 quer zu dessen Längsrichtung bewegen zu können, wodurch dessen Manövrierbarkeit wesentlich verbessert wird bzw. das Anlegen an eine Hafenmole wesentlich erleichtert wird.

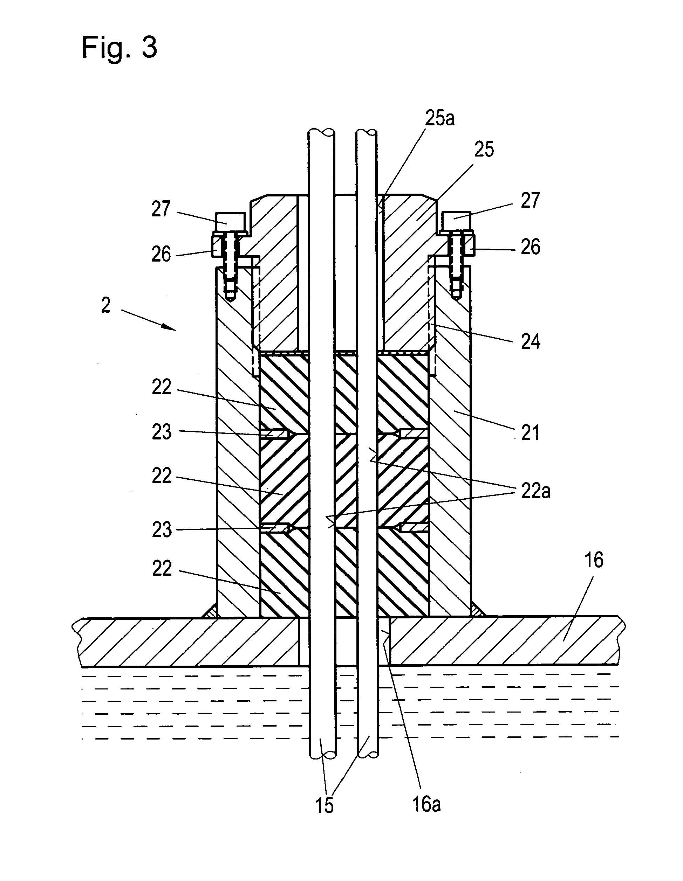

Wie dies in Fig.1a dargestellt ist, ist das Heckstrahlruder 12, welches sich in einer das Heck des Schiffes 1 durchsetzenden Durchbrechung 13 befindet, mit einem Turbinenrad 14 ausgebildet, welchem ein Antriebsmotor zugeordnet ist, welcher mittels Leitungen 15 mit Strom gespeist bzw. gesteuert wird. Diese Leitungen 15, welche eine Außenwand 16 des Schiffes durchsetzen, müssen gegenüber dieser so abgedichtet sein, dass ein Eindringen von Wasser in den Innenraum 10 des Schiffes 1 mit Sicherheit ausgeschlossen wird. Hierfür befindet sich an der Innenseite der Wand 15 eine Einrichtung 2, welche nachstehend anhand der Fig.3 bis Fig.6 erläutert ist.

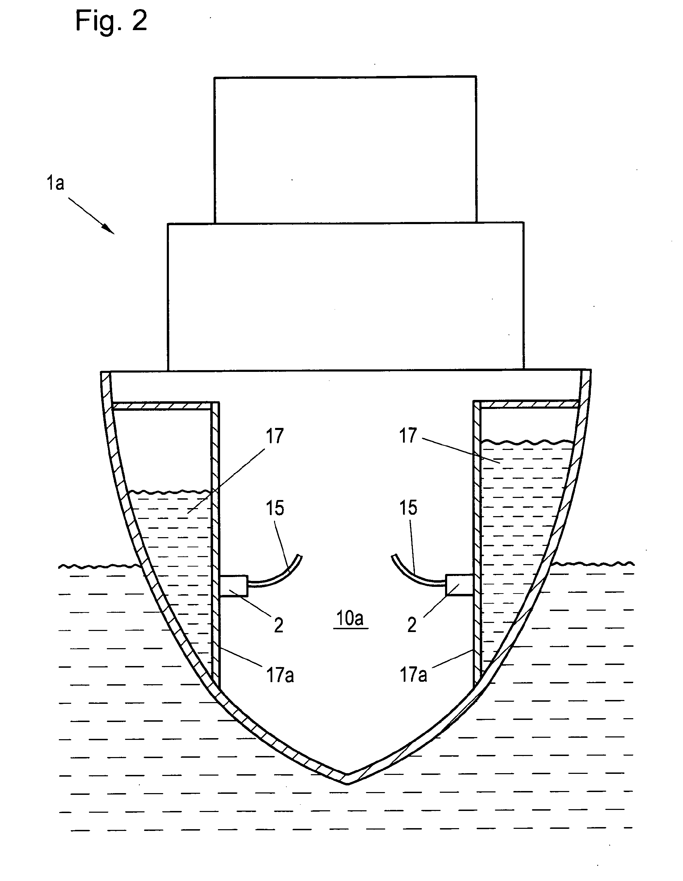

Gemäß Fig.2 besteht eine andere Anwendungsform dieser Einrichtung 2 darin, dass ein Schiff 1a mit zu dessen Stabilisierung dienenden Innentanks 17 ausgebildet ist, dessen Wände 17a von Leitungen 15 u.dgl. durchsetzt sind, welche zur Förderung des in diesen befindlichen Wassers, zur Speisung und Steuerung der in diesen befindlichen Pumpen und zur Erfassung der Betriebsdaten dienen. Auch dabei müssen die Leitungen, Kabel, Rohre u.dgl. durch die Wände 17a dieser Tanks 17 so hindurchgeführt sein, dass ein Austritt von Wasser aus den Tanks 17 in den Innenraum 10a des Schiffes 1a mit Sicherheit ausgeschlossen wird.

Wie dies aus Fig.3 ersichtlich ist, besteht diese Einrichtung 2 aus einem aus Metall, insbesondere aus Stahl, gefertigten zylindrischen Rohrstück 21, welches an die Innenseite der aus Stahl bestehenden Schiffswand 16 angeschweißt ist, wobei es eine in der Wand 16 befindliche Ausnehmung 16a umgibt. Innerhalb des Rohrstückes 21 befinden sich drei aus einem elastischen Material, insbesondere Gummi, hergestellte Dichtungselemente 22, zwischen welchen Abstandsringe 23 vorgesehen sind. An seinem der Wand 16 abgewandten freien Ende ist das Rohrstück 21 mit einem Innengewinde 24 ausgebildet, in welches ein Verschlusskörper 25 eingeschraubt ist, welcher mit einer axialen Bohrung 25a ausgebildet ist. Die Dichtungselemente 22 sind mit der Anzahl und den Durchmessern derjenigen Leitungen 15, Kabel, Rohre u.dgl., welche durch die Wand 16 hindurchgeführt werden, entsprechenden axialen Kanälen 22a ausgebildet. Weiters ist der zylindrische Verschlusskörper 25 mit radial abragenden Flanschen 26 ausgebildet, welche mit Bohrungen versehen sind, welche zur Aufnahme von Sicherungsschrauben 27 dienen, welche in die freie Stirnfläche des Rohrstückes 21 einschraubbar sind.

Zur abgedichteten Durchführung der Leitungen 15 , Kabel, Rohre u.dgl. durch die in der Wand 16 befindliche Ausnehmung 16a hindurch sind diese Leitungen 15 u.dgl. durch die Kanäle 22a der Dichtungselemente 22 hindurchgeführt und durchsetzen sie den Abschlusskörper 25 in der Bohrung 25a. Durch Einschrauben des Abschlusskörpers 25 in das Rohrstück 21 werden die Dichtungselemente 22 einerseits an die Leitungen 16 u.dgl. und andererseits an die Innenwandung des Rohrstückes 21 angepresst, wodurch ein Eindringen von Wasser in den innerhalb der Stahlwand 16 befindlichen Raum verhindert wird. Durch die Abstandsringe 23 wird eine flächige Anlage der Dichtungselemente 22 an die Leitungen 15 u.dgl. und an die Innenwand des Rohrstückes 21 gewährleistet.
Die Sicherungsschrauben 27 dienen dazu, ein Lösen des Verschlusskörpers 25 vom Rohrstück 21 infolge von Vibrationen zu verhindern.

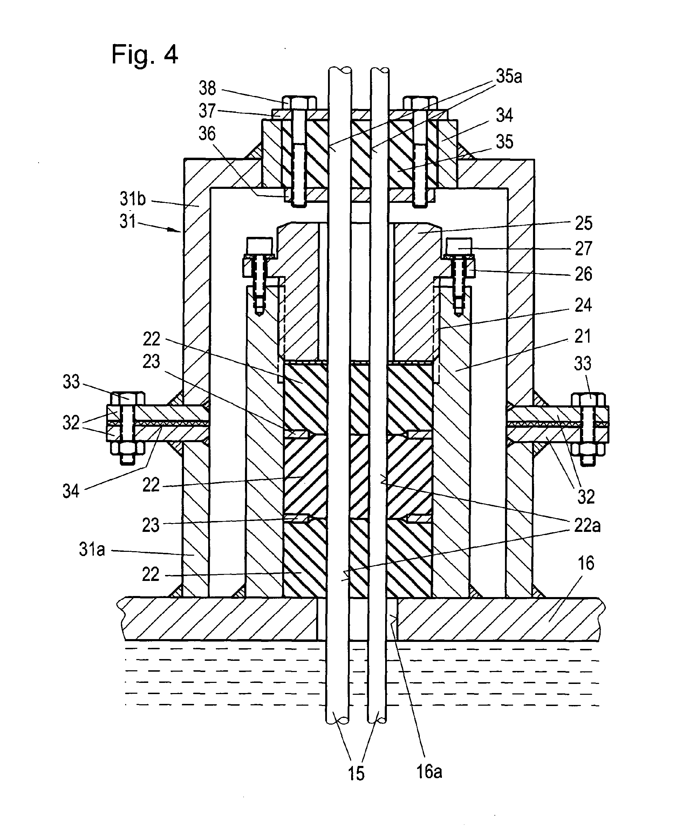

In Fig.4 ist eine erfindungsgemäße Einrichtung dargestellt, welche ergänzt ist, um eine doppelte Sicherheit zu gewährleisten. Dabei befindet sich radial außerhalb und im Abstand vom Rohrstück 21 ein aus einem Metall, insbesondere aus Stahl, hergestelltes zylindrisches oder prismatisches Gehäuse 31, welches gleichfalls an die Innenseite der Stahlwand 16 angeschweißt ist. Dieses Gehäuse 31 besteht aus einem ersten Teil 31 a, welcher an die Stahlwand 16 angeschweißt ist und aus einem mit diesem lösbar verbundenen zweiten Teil 31b, welcher mit einer abgedichteten Durchführung für die Leitungen 15 od.dgl. ausgebildet ist. Zur lösbaren Verbindung der beiden Gehäuseteile 31a und 31b sind diese mit radial abragenden Flanschen 32 ausgebildet, welche mittels Schraubbolzen 33 unter Zwischenlage einer Dichtung 34 miteinander verschraubbar sind.

Zur abgedichteten bzw. brandgesicherten Durchführung der Leitungen 15 u.dgl. durch das Gehäuse 31 hindurch dient ein an dieses angeschweißter Rahmen 34, in welchen ein mit Durchtrittskanälen 35a für die Leitungen 15 od.dgl. ausgebildeter Dichtungskörper 35 aus einem elastischen Material eingesetzt ist. Dem Rahmen 34 sind zwei an die Stirnflächen des Dichtungskörpers 35 anliegende Platten 36 und 37 zugeordnet, welche mittels den Dichtungskörper 35 durchsetzenden Schraubbolzen 38 miteinander so verschraubbar sind, dass der Dichtungskörper 34 an die Innenwand des Rahmens 34 und an die Leitungen 15 od.dgl. dichtend angepresst wird. Zur Inspektion des Innenraumes des Gehäuses 31 können die beiden Teile 31a und 31b des Gehäuses 31 voneinander gelöst werden. Zur Inspektion und zur Erneuerung der Dichtungselemente 22 kann der Abschlusskörper 25 vom zylindrischen Rohrstück 21 gelöst werden.

Durch das an die Innenseite der Stahlwand 16 angeschweißte Rohrstück 21, innerhalb dessen sich mehrere Dichtungselemente 22 befinden, wird eine gesicherte Hindurchführung der Leitungen 15 u.dgl. durch die Stahlwand 16 hindurch erzielt. Durch das das Rohrstück 21 umgebende Gehäuse 31 wird eine doppelte Sicherheit in der Abdichtung bewirkt.

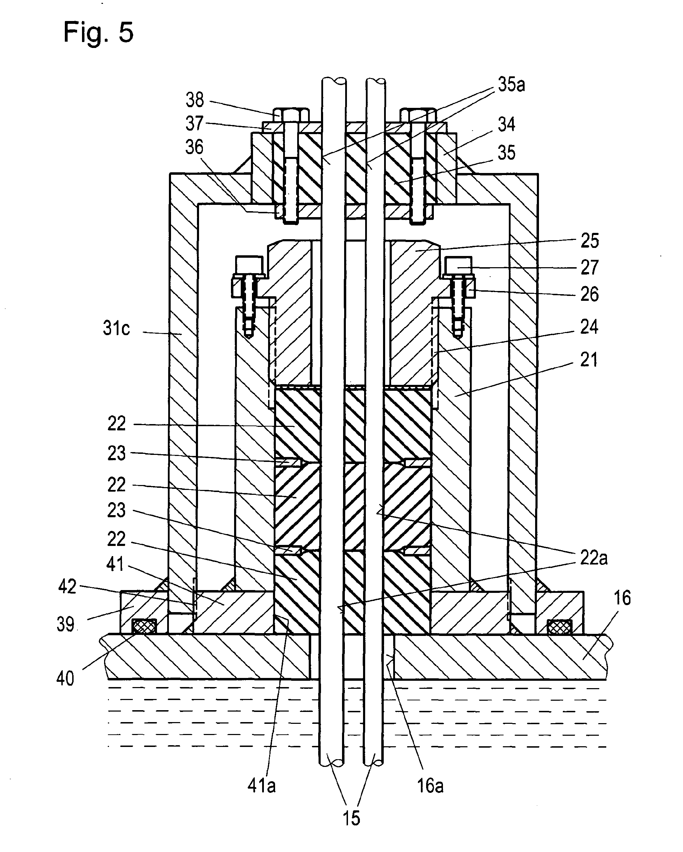

Die Ausführungsform gemäß Fig.5 unterscheidet sich von der Ausführungsform gemäß Fig.4 dadurch, dass an die Innenseite der Stahlwand 16 eine Tragplatte 41 angeschweißt ist, welche mit einer Ausnehmung 41 a ausgebildet ist, in welche das an die Stahlwand 16 anliegende Dichtungselement 22 eingesetzt ist, an welche weiters das zylindrische Rohrstück 21 angeschweißt ist und welche an ihrem radial außen befindlichen Rand mit einem Außengewinde 42 ausgebildet ist, auf welches das als Hohlzylinder ausgebildete äußere Gehäuse 31c aufgeschraubt ist. Zudem ist dieses Gehäuse 31c mit einem außen ringsumlaufenden Flansch 39 ausgebildet, welcher mit einem an die Innenseite der Stahlwand 16 anliegenden Dichtungsring 40 ausgebildet ist.

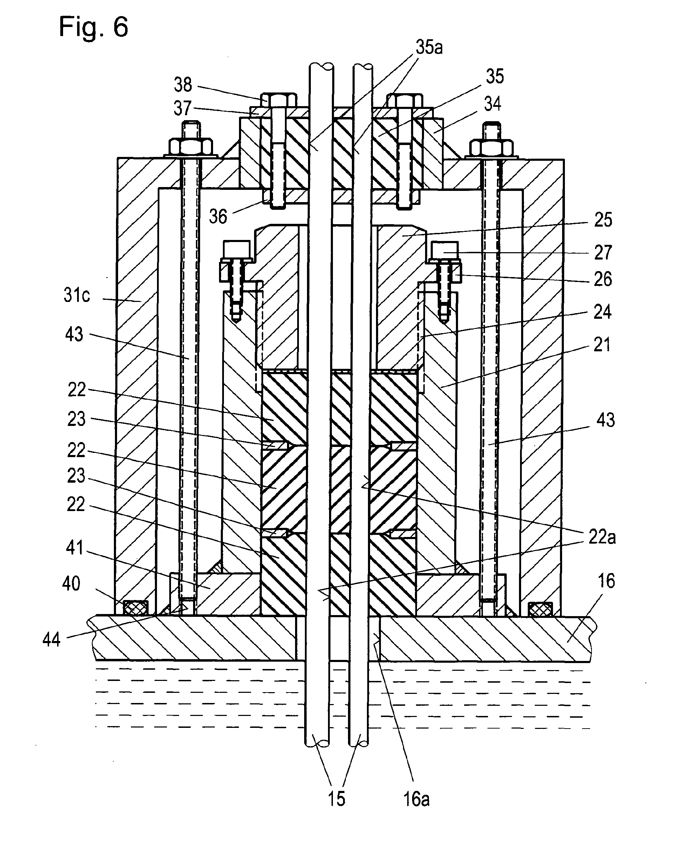

Die Ausführungsform gemäß Fig.6 unterscheidet sich von der Ausführungsform gemäß Fig.5 dadurch, dass das Gehäuse 31c mittels in Gewindebohrungen 44 der Platte 41 eingeschraubter Schraubbolzen 43 an dieser lösbar befestigt ist und dass in die an die Innenseite der Stahlwand 16 anliegende Stirnfläche des Gehäuses 31 mit einem Dichtungsring 40 ausgebildet ist.

Durch eine erfindungsgemäße Einrichtung ist eine Kabeldurchführung geschaffen, welche gegenüber dem Durchtritt von jeglichen Medien abgedichtet ist und welche zudem brandgesichert ist. Um in den im Rohrstück befindlichen Dichtungselementen eine gute Druckverteilung zu erzielen, sind mehre Dichtungselemente vorgesehen. Für diese Dichtungselemente muss ein Material gewählt werden, welches gegenüber einer Vielzahl von Medien, wie Meerwasser, Ölen, Säuren u.dgl., resistent ist und welches alterungsbeständig sowie brandbeständig ist. Da diese Dichtungselemente gegen die Innenseite derjenigen Wand, durch welche die Leitungen u.dgl. hindurchgeführt sind, anliegt, ist diese gegen Korrosion geschützt.
Da die einzelnen Teile miteinander lösbar verbunden sind, sind Inspektionen, Wartungsarbeiten und ein Austausch von Bestandteilen jederzeit und ohne besondere Schwierigkeiten durchführbar.
Durch ein Rohrstück für sich ist eine einfache Sicherheit in der Abdichtung gewährleistet. Durch ein das Rohrstück umgebendes Gehäuse wird eine doppelte Sicherheit gewährleistet.

Das Rohrstück und das Gehäuse können aus Metall, insbesondere aus Stahl bzw. aus Aluminium, oder aus einem Kunststoffmaterial hergestellt sein.

## Patentansprüche

1. Einrichtung zur abgedichteten bzw. brandgesicherten Durchführung von Leitungen (15), Rohren u.dgl. durch in Wänden (16) befindlichen Ausnehmungen (16a) hindurch unter Verwendung von mindestens einem elastisch verformbaren Dichtungselement (22), welches von den Leitungen (15), Kabeln, Rohren u.dgl. durchsetzt ist, **dadurch gekennzeichnet, dass** an einer Seite der Wand (16) an dieser ein zylindrisches Rohrstück (21) befestigt ist, in welches mindestens ein mit Kanälen (22a) ausgebildetes, elastisch verformbares Dichtungselement (22) eingesetzt ist, welches von den Leitungen (15), Kabeln, Rohren u.dgl. durchsetzt ist und dass dem freien Ende des zylindrischen Rohrstückes (21) ein Abschlusselement (25) zugeordnet ist, durch welches das elastisch verformbare Dichtungselement (22) innerhalb des Rohrstückes (21) an die Leitungen (15), Kabel, Rohre u.dgl. zur dichten Anlage gebracht wird.

2. Einrichtung nach Patentanspruch 1, **dadurch gekennzeichnet, dass** das zylindrische Rohrstück (21) an seinem freien Ende mit einem Gewinde, vorzugsweise mit einem Innengewinde (24), ausgebildet ist, mit welchem das Abschlusselement (25) verschraubbar ist.

3. Einrichtung nach einem der Patentansprüche 1 und 2, **dadurch gekennzeichnet, dass** dem Abschlusselement (25) mindestens eine Fixierschraube (27) zugeordnet ist, welche mit dem Rohrstück (21) verschraubbar ist.

4. Einrichtung nach einem der Patentansprüche 1 bis 3, **dadurch gekennzeichnet, dass** sich zwischen den in das Rohrstück (2) eingesetzten Dichtungselementen (22) jeweils Abstandsringe (23) befinden.

5. Einrichtung nach einem der Patentansprüche 1 bis 4, **dadurch gekennzeichnet, dass** außerhalb des Rohrstückes (21) ein Gehäuse (31, 31c) vorgesehen ist, welches sich vom Rohrstück (21) im Abstand befindet und welches gleichfalls an der Wand (16) befestigt ist, wobei das Gehäuse (31) mit mindestens einem Dichtungskörper (35) ausgebildet ist, welches von den Leitungen (15), Kabeln, Rohren u.dgl. durchsetzt ist.

6. Einrichtung nach Patentanspruch 5, **dadurch gekennzeichnet, dass** das Gehäuse (31) aus zwei miteinander lösbar verbundenen Teilen (31a, 31b) besteht, wobei der erste Teil (31 a) mit der Wand (16) starr verbunden ist und der zweite Teil mit dem mindestens einen Dichtungskörper (35) ausgebildet ist.

7. Einrichtung nach Patentanspruch 6, **dadurch gekennzeichnet, dass** die beiden Gehäuseteile (31a, 31b) mit einander zugeordneten, radial nach außen abragenden Flanschen (32) ausgebildet sind, welche miteinander verschraubbar sind, wobei sich vorzugsweise zwischen den Flanschen (32) eine Dichtung (34) befindet.

8. Einrichtung nach Patentanspruch 6, **dadurch gekennzeichnet, dass** an der Wand (16) eine Platte (41) starr befestigt ist, an welcher das Gehäuse (31c) lösbar befestigt ist.

9. Einrichtung nach Patentanspruch 8, **dadurch gekennzeichnet, dass** die Platte (41), welche kreisförmig berandet ist, an ihrer seitlichen Stirnfläche mit einem Gewinde (42) ausgebildet ist, mit welchem das Gehäuse (31c), welches hohlzylindrisch ausgebildet ist, verschraubt ist.

10. Einrichtung nach Patentanspruch 6, **dadurch gekennzeichnet, dass** die Platte (41) mit Gewindebohrungen (44) ausgebildet ist, in welche das Gehäuse (31c) durchsetzende Schraubbolzen (43) eingeschraubt sind.

11. Einrichtung nach einem der Patentansprüche 8 bis 10, **dadurch gekennzeichnet, dass** das Gehäuse (31 a) im Bereich seiner an die Wand (16) anliegenden Stirnfläche mit einer Dichtung (40) ausgebildet ist.

12. Einrichtung nach einem der Patentansprüche 5 bis 11, **dadurch gekennzeichnet, dass** das Gehäuse (31, 31c) mit einem Rahmen (34) ausgebildet ist, innerhalb dessen sich der mindestens eine Dichtungskörper (35) befindet, welcher von den Leitungen (15), Kabeln, Rohren u.dgl. durchsetzt ist, wobei sich außerhalb des Dichtungskörpers (35) zwei Pressplatten (36, 37) befinden, welchen Stellschrauben (38) zugeordnet sind.
